# EUROPEAN PATENT APPLICATION

(11) **EP 1 379 025 A2**
(43) Date of publication of application: **07.01.2004**
(21) Application number: 03014494.3
(22) Date of filing: 03.07.2003
(51) Int. Cl.: H04L 12/18

(54) **Management of a conferencing system using a web-based interface**

(30) Priority: 03.07.2002 US 393670 P
(71) Applicant: ALCATEL, 75008 Paris (FR)
(72) Inventor: Yeh, Chiang, Arcadia 91006, California (US); Wengrovitz, Michael, Concord 01742, Massachusetts (US)
(74) Representative: Schäfer, Wolfgang, Dipl.-Ing.

(57) **Abstract**

The present invention enables an inter-network to provide enhanced conferencing services (such as, for example, multiple discussions, whispering and filtering) which includes one or more conference networks coupled to a service provider network over a public Internet, where the service provider network includes control features for establishing conferencing sessions. In particular, the present invention provides a conferencing (audio and/or video and/or the like networked conferencing with control features supportive of sub-conferencing) technology that incorporates enhanced control features (multiple discussions, whispering and filtering and the like) in an Internet-based solution by extending the traditional concept of "room" to "table" and "avatar" to organize a conferencing session.

## Description

### FIELD OF THE INVENTION

This invention relates generally to conferencing, and more particularly, to providing a web-based conferencing system with a management interface.

### BACKGROUND OF INVENTION

Conference systems enable conferencing and multi-user chat sessions by mixing various audio sources to members. An example of an existing conferencing system would be Polycom®. These systems provide rudimentary controls, such as muting, to standard telephones, PBX terminals, and more recently, to dedicated conferencing units. Unfortunately, the control features on telephones and the like are limited due to the relative lack of keys, user interfaces and options; the control features on PBXs and the like are limited due to the relative lack of capability to control multi-user, multi-session conferences and dedicated conferencing units and the like are limited due to the relative lack of conferencing control since they are only designed to provide audio mixing capabilities. The advancement of Internet-based conferencing technology provides options for enhanced control over group communication sessions as well as the possibility for some new features. Exploitable Internet-based methods include features such as "whispering" (a secondary session for members to privately talk in parallel with the main session), "filtering" (where users can selectively block out another user or group of users), and "bridging" (where a user or computer, acting on behalf of another user or a group of users, participates in multiple conferences as a proxy agent and/or audio translator of foreign languages). Consequently, what is needed is an inter-network for providing enhanced conferencing services (such as, for example, multiple discussions, whispering and filtering) which includes one or more client networks coupled to a service provider network over a public Internet, where the service provider network includes control features for establishing conferencing sessions. Details about telephone services on the Internet are set forth in Internet Engineering Task Force Request for Comment 1789 entitled "INETPhone: Telephone Services and Servers on Internet," April 1995 (hereinafter referred to as RFC 1789), which is incorporated herein by reference; Request for Comment 2543 entitled "SIP: Session Initiation Protocol," March 1999 (hereinafter referred to as RFC 2543), which is incorporated herein by reference; and Request for Comment 2976 entitled "The SIP INFO Method," October 2000 (hereinafter referred to as RFC 2976), which is incorporated herein by reference.

### SUMMARY OF THE INVENTION

The present invention fulfills the above stated need by providing an inter-network for providing enhanced conferencing services (such as, for example, multiple discussions, whispering and filtering) which includes one or more client networks coupled to a service provider network over a public Internet, where the service provider network includes control features for establishing conferencing sessions. In particular, the present invention provides a conferencing (audio and/or video and/or the like networked conferencing with control features supportive of sub-conferencing) technology that incorporates enhanced control features (multiple discussions, whispering and filtering and the like) in an Internet-based solution by extending the traditional concept of "room" to "table" and "avatar" to organize a conferencing session. A "table" is preferably a private session for the purpose of invoking enhanced control features (such as, for example, multiple discussions, and filtering) which preferably involve one or more members as conference participants. "Whispering" is an unsolicited communication from one member as conference participant to one or more other members as conference participants (which is bi-directional once the session is established and can be ended by any whisper participant or the creator). If a member as conference participant wishes to start, for example, a "whispering" session, then the member will preferably need to create a whispering session. If a member as conference participant wishes to start, for example, a "table" session, they will then preferably need to create a table and then invite one or more other members as conference participants to the table for a private discussion (only the creator of the table can end it).
Only the invited members as conference participants can see the whispering or table-the other non-invited members as conference participants remain oblivious to or otherwise unreceptive to the whispering or table. An "avatar" is preferably an incarnation of a member as conference participant as they participate in multiple conferences. Nevertheless, this incarnation may also be an instance of the member as conference participant, as they toggle between different conferences, or it may be a software mechanism, another human agent or a team of agents acting on behalf of the member as conference participant, such as, for example, paid operators, other users, and/or secretaries that provide services to monitor, transcribe, or even interact with other members as conference participants. These enhanced control features are available to the member conference administrator as well as other members as conference participants. In essence, the present invention enables members as conference participants to lead their own mini-discussions or sub-conferences within a conference (i.e., a conference within a conference). In addition, the present invention is media independent. The controlled targets can be conventional PBX terminals, VoIP clients, cell phones, and the like. Since the control mechanism is preferably a standard web-based graphical user interface (GUI) (as modified for conferencing), a member can use any browser to access their features. The following description, together with accompanying figures further detail the present invention.

### BRIEF DESCRIPTION OF THE DRAWINGS

These and other features, aspects and advantages of the present invention will be more fully understood when considered with respect to the following detailed description, appended claims, and accompanying drawings where:

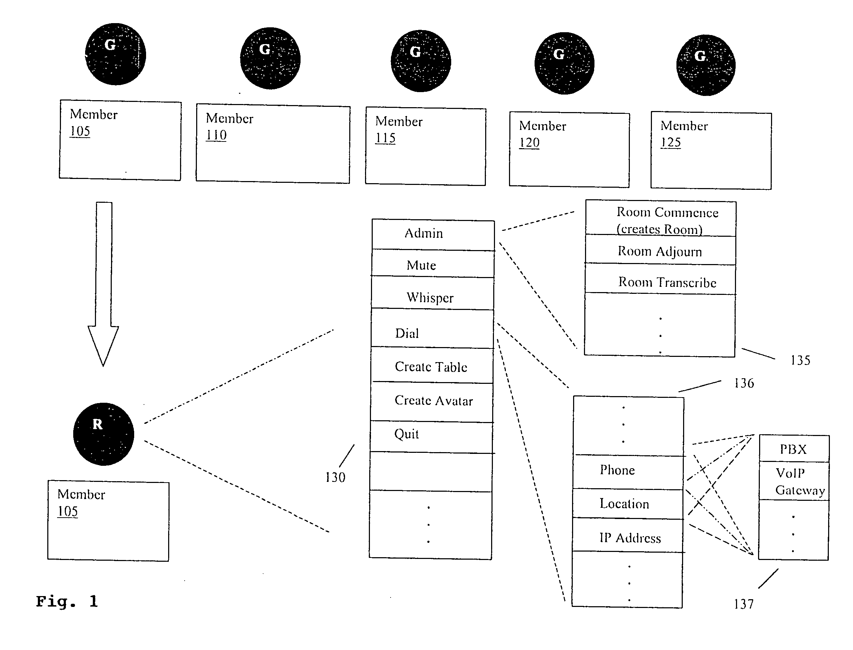

FIG. 1 is a schematic block diagram of one or more members who may join into a conference that provides enhanced conferencing control features in an Internet-based conference solution according to one embodiment of the invention;

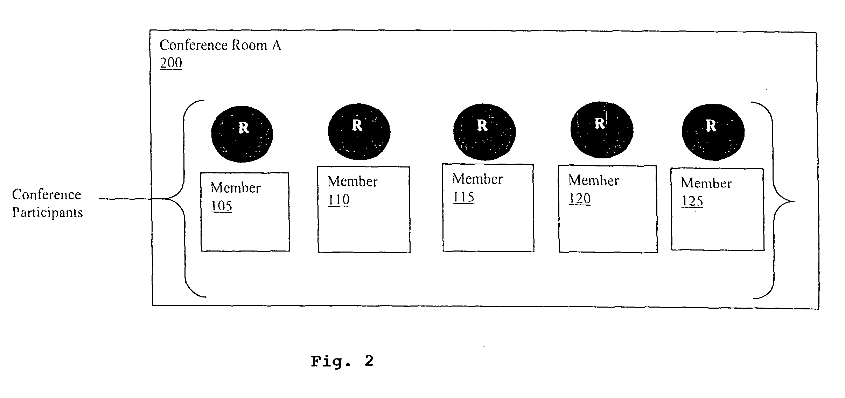

FIG. 2 is a functional block diagram of one or more members joined as conference participants in a conference that provides enhanced conferencing control features in an Internet-based conference solution according to one embodiment of the invention;

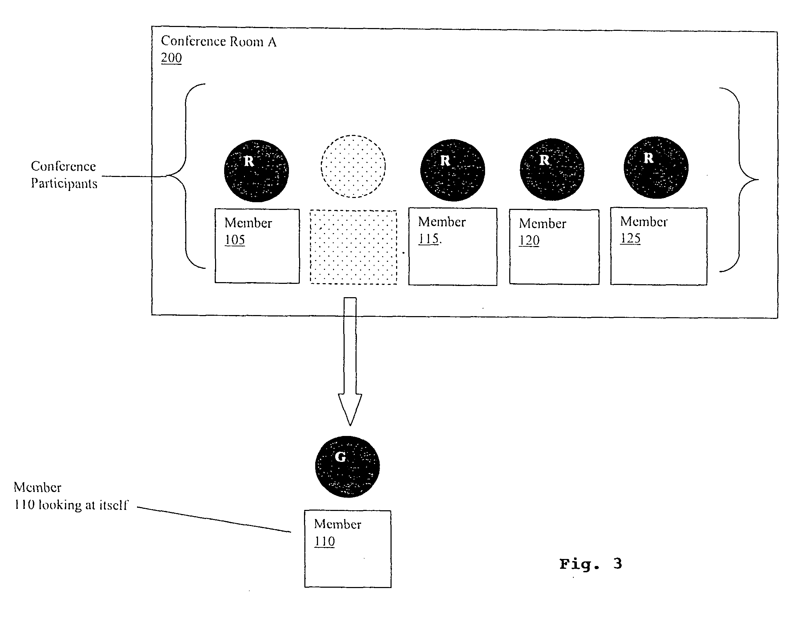

FIG. 3 is a functional block diagram of one or more members joined as conference participants in a conference that provides enhanced conferencing control features in an Internet-based conference solution where one member as conference participant quits out of the conference to be just a member by itself according to one embodiment of the invention;

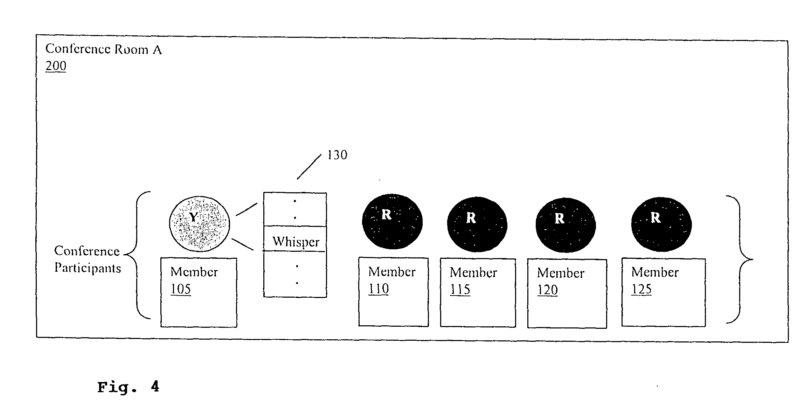

FIG. 4 is a functional block diagram of one or more members joined as conference participants in a conference that provides enhanced conferencing control features in an Internet-based conference solution where one member whispers to another member according to one embodiment of the invention;

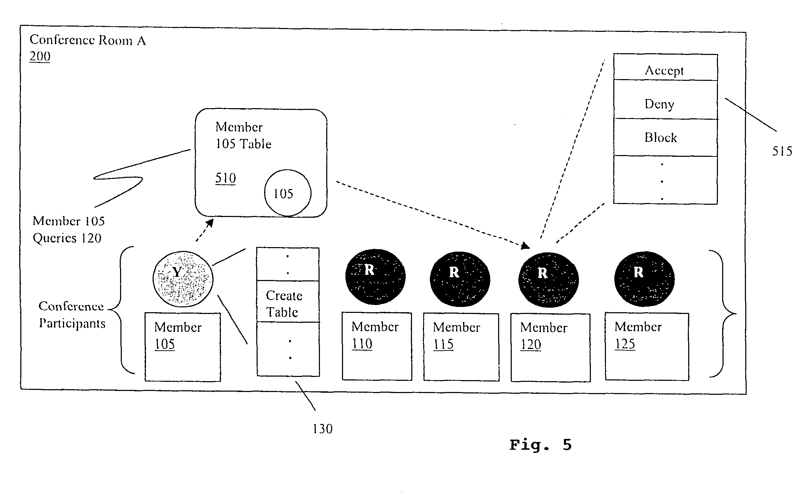

FIG. 5 is a functional block diagram of one or more members joined as conference participants in a conference that provides enhanced conferencing control features in an Internet-based conference solution where one or more members invite one or more other members to a table according to one embodiment of the invention;

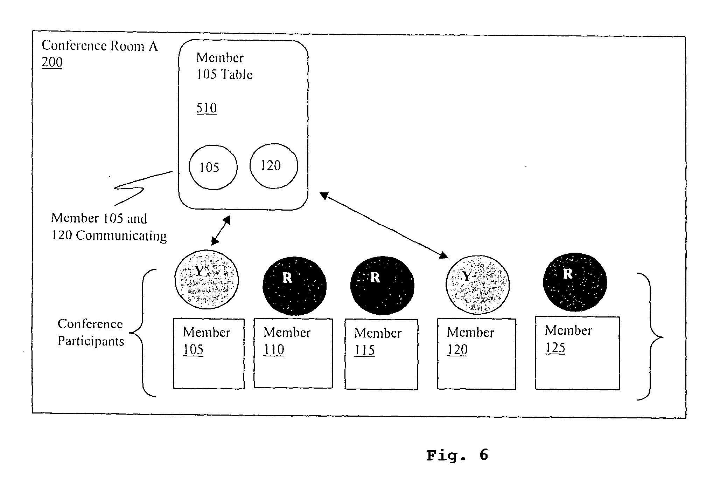

FIG. 6 is a functional block diagram of one or more members joined as conference participants in a conference that provides enhanced conferencing control features in an Internet-based conference solution where one or more members have accepted an invite from one or more other members to a table according to one embodiment of the invention;

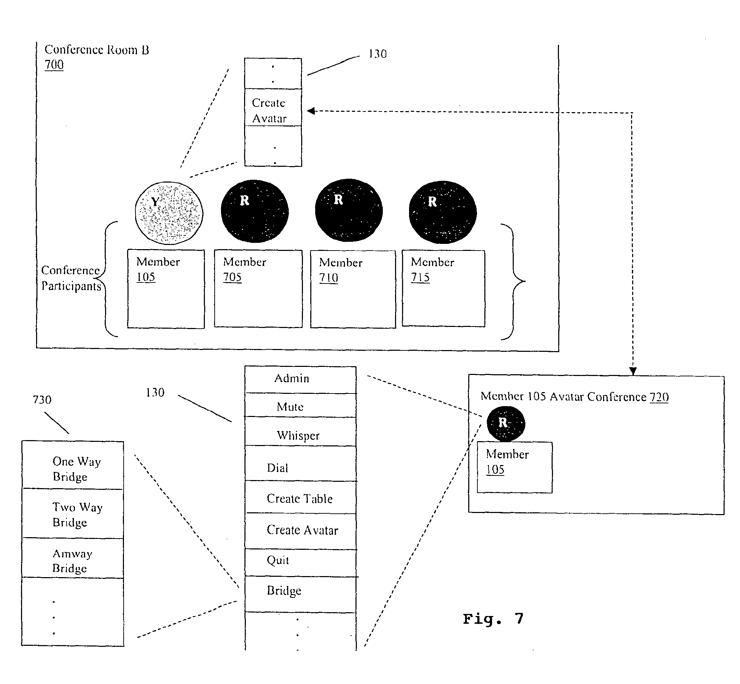

FIG. 7 is a functional block diagram of one or more members joined as conference participants in a conference that provides enhanced conferencing control features in an Internet-based conference solution where one or more members as conference participants have created another conference using an Avatar function according to one embodiment of the invention; and

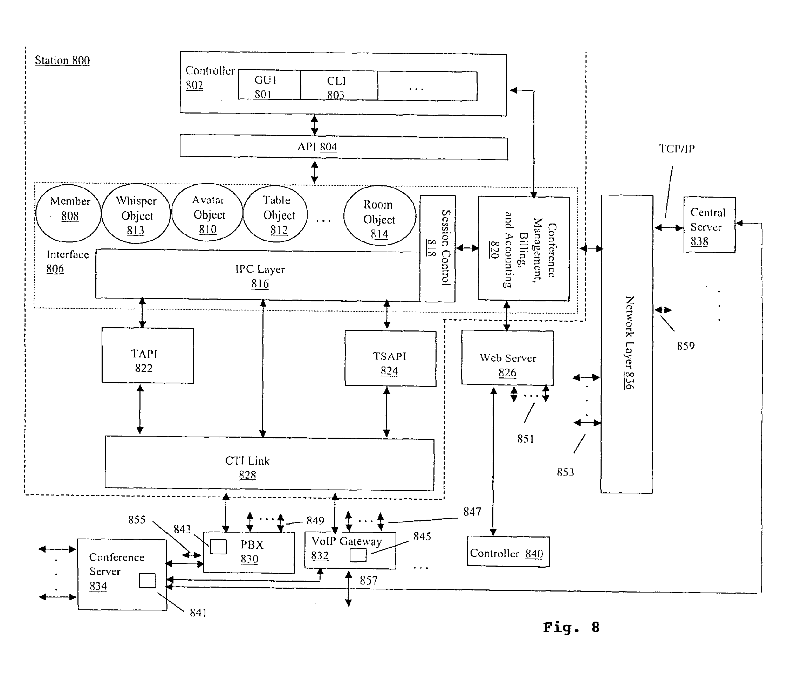

FIG. 8 is a functional block diagram of the present invention in a system that provides enhanced conferencing control features in an Internet-based conference solution, according to one embodiment of the invention.

### DETAILED DESCRIPTION

FIG. 1 is a schematic block diagram of one or more members who may join into a conference that provides enhanced conferencing control features in an Internet-based conference solution according to one embodiment of the invention. The system preferably includes one or more Members 105, 110, 115, 120, 125. The Members 105, 110, 115, 120, 125 may or may not join into a conference to become conference participants. Here, the Members 105, 110, 115, 120, 125 are simply users that are preferably muted and ready to communicate with a conference (but do not have to--which is indicated by the "G" in the circle icons above each member icon). The Members 105, 110, 115, 120, 125 preferably also contain identification (I.D.) information which may include the member name, title, IP address and the like. The I.D. information is setup when a member is created. In order for a member to create itself, a visual basic, visual C and/or the like programming language is used with a standard graphical user interface (GUI) to define and I.D. the member (which is stored in a database). If one of the Members 105, 110, 115, 120, 125 wants to initiate a conference, that member will be labeled as the "administrator" of that self-initiated conference. The administrator is the one that creates, controls, names, adjourns and has a password for the conference (but the administrator may delegate functions). For example, if Member 105 wants to initiate a conference and create a conference room, Member 105 would, by using their GUI (which is a standard GUI modified to allow conferencing functions), click on their circle icon with the "G" in it to open dialog box 130. Dialog box 130 is available for any member or conference participant; however, the "Admin" function is only available to the member or conference participant that is identified as the administrator (unless the administrator has delegated authority to another) and "Bridge" is only available to a member as conference participant in an avatar session. Once Member 105 selects "Admin", dialog box 135 will open up where Member 105 will have to select "Room Commence" in order to create a conference room (such that the Member 105 circle icon would turn red, a circle with an "R" in it, indicating that the member is now a conference participant, and Member 105 would be labeled as the administrator). Member 105 (as administrator and member conference participant) would now allow other members to join his conference room; however, the other members would not be allowed to communicate (and would be muted) until the administrator, Member 105, selected each to be a conference participant and selected "Room Commence" again start the discussion. In order for a member to enter Member 105's conference, they would have to select their circle with a "G" in it, open dialog box 130, select "Dial", open dialog box 136, select "Phone", "Location", "IP Address" or the like, open dialog box 137, and select "PBX", "VoIP Gateway" or the like in order to connect to the conference (where "Phone", "Location", "IP Address" and/or the like and "PBX", "VoIP Gateway" and/or the like, identify connection methods which are discussed in FIG. 8). Once this has occurred, all the selected members would be able to communicate as conference participants (changing their circle icons with a "G" in it to a circle with an "R" in it). If a member that entered the conference room was not selected as a conference participant, the member would not hear the conference and would be left alone (and their circle icon with a "G" in it would remain as a circle icon with a "G" in it).

FIG. 2 is a functional block diagram of one or more members joined as conference participants in a conference that provides enhanced conferencing control features in an Internet-based conference solution according to one embodiment of the invention. The system includes a virtual Conference Room A 200 with the one or more Members 105, 110, 115, 120, 125. In this case, all of the Members 105, 110, 115, 120, 125 have been joined by the administrator into the conference and are communicating with each other as conference participants (as indicated by the "R" in the circle icons above each member icon and Conference Room A 200 encircling the Members 105, 110, 115, 120, 125). Notwithstanding, any Member 105, 110, 115, 120, 125 as conference participant, may click on their circle icon to trigger the dialog boxes 130, 135, 136 discussed in FIG. 1. The administrator may also grant certain members as conference participants advanced features which are inaccessible to other members as conference participants.

FIG. 3 is a functional block diagram of one or more members joined as conference participants in a conference that provides enhanced conferencing control features in an Internet-based conference solution where one member as conference participant quits out of the conference to be just a member by itself according to one embodiment of the invention. The system includes virtual Conference Room A 200 with the one or more Members 105, 110, 115, 120, 125 as conference participants. Once the one or more Members 105, 110, 115, 120, 125 join Conference Room A 200, they can begin communicating with each other once the administrator selects each Member 105, 110, 115, 120, 125 as conference participant and starts the session. If a member as conference participant, here Member 110, quits Conference Room A 200, Member 110 will click on his circle icon with the "R" in it to open dialog box 130 and will select "Quit." Consequently, Member 110 is dropped from the conference, can no longer hear the other Members 105, 115, 120, 125 as conference participants and is essentially left only communicating with himself as a member (as indicated by the "G" in the circle icon above the member 110 icon). The remaining Members 105, 115, 120, 125 as conference participants continue to communicate with each other, unaffected by Member 110 quitting the conference (as indicated by the "R" in the circle icons above and Conference Room A 200 encircling the Members 105, 115, 120, 125 as conference participants). In such configuration, the administrator cannot end or adjourn the conference (as in FIG. 1, using dialog box 135) until the conference room has been vacated, either by the administrator (by revoking the all the member participants privileges to communicate in the conference by clicking on their respective icons and selecting "Quit") or by the all members themselves as conference participants by clicking on their respective icon and selecting "Quit" to leave the conference room empty.

FIG. 4 is a functional block diagram of one or more members joined as conference participants in a conference that provides enhanced conferencing control features in an Internet-based conference solution where one member whispers to another member according to one embodiment of the invention. The system includes virtual Conference Room A 200, dialog box 130 and the one or more Members 105, 110, 115, 120, 125 as conference participants. Here, Member 105 decides to whisper to Member 120. Consequently, Member 105 selects itself, opens up dialog box 130, selects "Whisper" from its menu, and then selects Member 120 in order to invite Member 120 into a whispering session. Now Member 105 and 120 can communicate with one another, while still hearing the other Members 110, 115, 125 without the other Members 110, 115, 125 hearing them.

FIG. 5 is a functional block diagram of one or more members joined as conference participants in a conference that provides enhanced conferencing control features in an Internet-based conference solution where one or more members invite one or more other members to a table according to one embodiment of the invention. The system includes virtual Conference Room A 200, table 510, dialog box 130, dialog box 515 and the one or more Members 105, 110, 115, 120, 125 as conference participants. Here, Member 105 has decided to invite Member 120 to a table session (as indicated by the "Y" in the circle icon above the Member 105 icon as a conference participant while in Conference Room A 200 encircling Members 105, 110, 115, 120, 125).

Consequently, Member 105 selects itself, opens up dialog box 130, selects "Create Table" from the menu so that Member 105 Table 510 appears with a Member 105 circle icon shown on Table 510. From here, Member 105 selects Member 120 in order to invite Member 120 to Table 510. The "Create Table" operation creates Table 510 (which belongs to Member 105) and generates an audio and/or visual notice to Member 120 (only) to notify Member 120 that Member 105 has invited them to a table session. With dialog box 515, Member 120 may "Accept", "Deny", "Block", or the like the Member 105 invite to its Table 510. If Member 120 denies or blocks the invite from Member 105, Member 120 is not joined in a table session with Member 105 and Member 105 receives notice of such denial or block in an audio and/or video format. In the case where Member 120 blocks the Member 105 invite to the table session, Member 105 is notified of such "Block" and is blocked, until unblocked by Member 120, from sending table invites to Member 120. Member 105 may now close his table or invite another member as a conference participant.

FIG. 6 is a functional block diagram of one or more members joined as conference participants in a conference that provides enhanced conferencing control features in an Internet-based conference solution where one or more members have accepted an invite from one or more other members to a table according to one embodiment of the invention. The system includes virtual Conference Room A 200, table 510 and one or more invited Members 105, 110, 115, 120, 125 as conference participants. In this case, Member 120 accepted the Member 105 table invite of FIG. 5 by using dialog box 515 (as indicated by Member 105 and 120 circle icons in Table 510 and the "Y" in the circle icons above Member 105 and 120 as conference participants while in Conference Room A 200 encircling Members 105, 110, 115, 120, 125). Now Members 105 and 120 can communicate bidirectionally with each other in private Member 105 Table 510. In such case, when Member 105 selects Table 510, he will be able to communicate with Member 120 in a private session and when Member 105 selects Conference Room A 200, he will be able to communicate with Members 110, 115, 125 as conference participants and Member 120 if Member 120 is in Conference Room A 200 (and not on Table 510). Additionally, when Member 120 selects Table 510, he will be able to communicate with Member 105 in a private session and when Member 120 selects Conference Room A 200, he will be able to communicate with Members 110, 115, 125 as conference participants and Member 105 if Member 105 is in Conference Room A 200 (and not on Table 510). Alternatively, when Member 105 selects Table 510, Member 105 will be able to communicate with Member 120 in a private session and hear Conference Room A 200 where each conference volume can be adjusted to a preferred listening level and when Member 120 selects Table 510, Member 120 will be able to communicate with Member 105 in a private session and hear Conference Room A 200 where each conference volume can be adjusted to a preferred listening level.

FIG. 7 is a functional block diagram of one or more members joined as conference participants in a conference that provides enhanced conferencing control features in an Internet-based conference solution where one or more members as conference participants have created another conference using an Avatar function according to one embodiment of the invention. The system includes virtual Conference Room B 700, Member 105 Avatar Conference 720, dialog box 130, dialog box 730 and one or more Members 105, 705, 710, 715, as conference participants. Here, the avatar is preferably an incarnation of Member 105 as a conference participant as he participates in multiple conferences: Conference Room B 700 and Member 105 Avatar conference 720 (as indicated by the "Y" in the circle icon above the Member 105 icon while in Conference Room B 700 encircling Members 105, 705, 710, 715 as conference participants). Nevertheless, this incarnation may also be an instance of Member 105, as he toggles between Conference Room B 700 and Member 105 Avatar Conference 720, where it may be a software mechanism, another human agent or a team of agents acting on behalf of Member 105, such as, for example, paid operators, other users, and/or secretaries that provide services to monitor, transcribe, or even interact with the other members as conference participants as per instructions from Member 105. The agent(s), mechanical, human, or otherwise, may be located anywhere so long as they have access the Conference Room B 700 and Member 105 Avatar Conference 720. To establish an avatar session, as illustrated here, Member 105, will select itself to open dialog box 130 and will select "Create Avatar" to create Member 105 Avatar Conference 720. Consequently, a Member 105 incarnation icon is also shown in Member 105 Avatar Conference 720; however, Member 105 is alone (no other members) and red (already a conference participant) since Member 105 is the administrator of Avatar Conference 720. Member 105 now has the option to perform any of the functions in dialog box 130 (from Member 105 Avatar Conference 720), including "Bridge." Only avatar has the ability to "bridge" conferences by relaying part or all of a conference to another party. Consequently, Member 105 can participate in two separate conferences at the same time and, in regard to Member 105 Avatar Conference 720, perform any of the functions of an administrator as conference participant in a new conference (as described above). Member 105 (and any other members as conference participants in Member 105 Avatar Conference 720) may possess the ability to create tables, start whispering sessions and the like. Additionally, Member 105 can participate in Conference Room B 700 and Member 105 Avatar Conference 720 where all members as conference participants may communicate between the conferences. Member 105 can use the "One Way Bridge" function of dialog box 730 to enable all members of Conference Room B 700 to hear all members of Member 105 Avatar Conference 720 but all members of Member 105 Avatar Conference 720 cannot hear all members of Conference Room B 700 (or vise versa) or use the "Two Way Bridge" function so that all members of Conference Room B 700 can hear all members of Member 105 Avatar Conference 720. Member 105 can participate in Conference Room B 700 and Member 105 Avatar Conference 720 where one or more selected members as conference participants may communicate between the conferences by using the "AmWay Bridge" function in dialog box 730. In such configuration, member 105 can select "One Way Bridge" or "Two Way Bridge" where volume levels for each conference can be adjusted. Also, Member 105 may record/transcribe bridged Conference Room B 700 and/or Member 105 Avatar Conference 720. Member 105 Avatar Conference 720 may translate the used languages in near-real-time and provide audio and/or video to Member 105 as the creator of the avatar, an administrator and conference participant.

FIG. 8 is a functional block diagram of the present invention in a system that provides enhanced conferencing control features in an Internet-based conference solution, according to one embodiment of the invention. In a preferred embodiment, the system includes Station 800, Public Branch Exchange (PBX) 830, Voice Internet Protocol (VoIP) Gateway 832, Conference Server 834, Network Layer 836, Central Server 838, Web Server 826, and Controller 840. According to this embodiment, all elements located within the client network of Station 800 are preferably centralized, all elements located within the service provider network of Conference Server 834 are preferably not centralized, and all elements located in-between: PBX 830, VoIP Gateway 832, Web Server 826, Controller 840, Network Layer 836 and Central Server 838, are preferably not centralized. Also, Public Branch Exchange (PBX) 830, Voice Internet Protocol (VoIP) Gateway 832, Network Layer 836, and Web Server 826 couple 849, 847, 853, 851, respectively, to other client networks like Station 800 and Public Branch Exchange (PBX) 830, Voice Internet Protocol (VoIP) Gateway 832 and Central Server 838 couple 855, 857, 859, respectively, to other service provider networks like Conference Server 834.

The Station 800 preferably includes Controller 802 (which hosts a standard Graphical User Interface (GUI) 801, standard Command Line Interface (CLI) 803 and the like), a standard Application Programming Interface (API) 804, Interface 806 (which hosts Member 808, Avatar Object 810, Table Object 812, Whisper Object 813, Room Object 814, a standard Inter-Process Communication (IPC) Layer 816, a standard Session Control 818 and a standard Conference, Management, Billing and Accounting element 820), a standard Telephony Application Programming Interface (TAPI) 822, a standard Telephony Source Application Programming Interface (TSAPI) 824, and a standard Computer Telephone Integration (CTI) Link 828 which houses an API library, software drivers and the like that aid it in communicating with third party hardware. The PBX 830 preferably includes one or more audio mixers 843; VoIP Gateway 832 preferably includes one or more audio mixers 845; and Conference Server 834 preferably includes one or more audio mixers 841, each of which are hardware, software and/or firmware that combine multiple input audio signals into a single audio output signal and each of which are controlled by CTI Link 828. The Member 808, Avatar Object 810, Table Object 812, Whisper Object 813, and Room Object 814 may be similar to the member 105, 110, 115, 120, 125; "Create Avatar" of dialog box 130; "Create Table" of dialog box 130; "Whisper of dialog box 130; and the "Admin" (dialog box 130) function "Room Commence" of dialog box 135, respectively, of the previous embodiments.

The Controller 802 and 840 are preferably standard computers for providing control of interface 806 via API 804. Consequently, once Member 808 has created itself, as described in FIG. 1, by using a visual basic, visual C and/or the like programming language using a standard graphical user interface (GUI) to define and I.D. the member (which is stored in a database), Member 808 will be able to "Dial" (using dialog box 130) a "Phone", "Location", "IP Address" or the like (using dialog box 136) using a PBX like PBX 830, a VoIP Gateway like VoIP Gateway 832, or the like (as shown in dialog box 137), where both PBX 830 and VoIP Gateway 832 are coupled to a Conference Server such as Conference Server 834.

To "Dial" a "Phone", "Location", "IP Address" or the like (using dialog box 136 from FIG. 1) over a "PBX" like PBX 830, Member 808 would first select themselves, open dialog box 130, select "Dial", open dialog box 136 and select "Phone", "Location", "IP Address" or the like, open dialog box 137 and select "PBX" to connect to the respective end point conference. Thereafter, PBX 830 may connect Member 808 to a particular requested conference via Conference Server 834 using conventional conferencing techniques. As is conventional in teleconferencing, Member 808 would have to input the particular conference "Phone", "Location", "IP Address" or the like, a username and a password using GUI 801 and/or CLI 803. Once Member 808 has entered the appropriate information, as is also conventional with conferencing systems, API 804 provides the coupling to Interface 806, Interface 806 provides for the coupling to IPC Layer 816, IPC Layer 816 provides for the coupling to TAPI 822 and TSAPI 824, TAPI 822 and TSAPI 824 signal CTI Link 828 to contact Conference Server 834 via PBX 830 and CTI Link 828 coordinates the call request with PBX 830 and authentication with Conference Server 834. If the conference "Phone", "Location", "IP Address" or the like is correct, and member 808 is authenticated, Member 808 will be joined into the requested conference "Phone", "Location", "IP Address" or the like room and will be able to see other members (if there) but not communicate with them yet. If Member 808 is the administrator, Member 808 will have the administrator privileges as described in the previous figures. If Member 808 is just a member, Member 808 will be joined as a member (in the conference room) but will have to wait for the administrator to select them and commence the conference.

To "Dial" a "Phone", "Location", "IP Address" or the like (using dialog box 136 from FIG. 1) over a "VoIP Gateway" like VoIP Gateway 832, Member 808 would first select themselves, open dialog box 130, select "Dial", open dialog box 136 and select "Phone", "Location", "IP Address" or the like, open dialog box 137 and select "VoIP Gateway" to connect to the respective end point conference. Thereafter, VoIP Gateway 832 may connect Member 808 to a particular requested conference via Conference Server 834 using conventional conferencing techniques. As is conventional in teleconferencing, Member 808 would have to input the particular conference "Phone", "Location", "IP Address" or the like, a username and a password using GUI 801 and/or CLI 803. Once Member 808 has entered the appropriate information, as is conventional with conferencing systems, a request to enter the particular conference is sent to API 804, where API 804 provides for the coupling to Interface 806, Interface 806 provides for the coupling to IPC Layer 816, IPC Layer 816 provides for the coupling to Session Control 818, Session Control provides for the coupling to Conference, Management, Billing and Accounting 820, Conference, Management, Billing and Accounting 820 provides for the coupling to Network Layer 836, Network Layer 836 provides for the coupling to Central Server 838 and Central Server 838 provides for the coupling and coordinates the call request and authentication with Conference Server 834. If the conference "Phone", "Location", "IP Address" or the like is correct, Member 808 is authenticated with an authorization sent back over the same path that the request came from. Once Interface 806 receives the authorization, it routes the communication from Member 808 directly to CTI Link 828 and CTI Link 828 coordinates the conversation with VoIP Gateway 832 and Conference Server 834.

Now Member 808 will be joined into the requested "Phone", "Location", "IP Address" or the like conference and will be able to see the other members (if there) but not communicate with them yet. If Member 808 is the administrator, Member 808 will have the administrator privileges as described in the previous figures. If Member 808 is just a member, Member 808 will be joined as a member (in the conference room) but will have to wait for the administrator to select them and commence the conference.

In either of the above cases, whether PBX 830 or VoIP Gateway 832 is used, Member 808 will be able to use all the functions described in the previous figures, including Whisper (Whisper Object 813), Create Table (Table Object 812) and Create Avatar (Avatar Object 810). If Member 808 decides to whisper to another member or create a table or avatar to communicate to one or more other members while using PBX 830, Member 808 will couple to the another member or one or more other members via CTI Link 828, PBX 830, one or more audio mixers 843 or one or more audio mixers 841 and coupling 849. If Member 808 decides to whisper to another member or create a table or avatar to communicate to one or more other members while using VoIP Gateway 832, Member 808 will couple to the another member or one or more other members via CTI Link 828, VoIP Gateway 832, one or more audio mixers 845 or one or more audio mixers 841 and coupling 847.

An external user may also enjoy the above communication system by logging into a web server. In this case, Controller 840 enters the system through Web Server 826, Web Server 826 couples Controller 840 to Conference, Management, Billing and Accounting 820 and Conference, Management, Billing and Accounting 820 couples Controller 840 to Controller 802 so that Controller 840 can make use of GUI 801 and/or CLI 803 in establishing or connecting to a conference session.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A method for providing enhanced conferencing control features in an Internet-based conference solution, comprising the steps of:
configuring a member using one or more commands to result in displaying a member icon on a computer screen; and
storing the configuration for the member into a file.

2. The method of claim 1, wherein the step of configuring comprises inputting definition and identification information.

3. The method of claim 2, wherein the step of storing comprises storing the member configuration in a database.

4. The method of claim 3, further comprising the steps of:
assigning the member as a member administrator using or more commands;
creating a conference room by the member administrator using one or more commands;
connecting to a server by the member administrator to allow other members to join the conference room using one or more commands; and
selecting certain of the other members by the member administrator to be conference participants in the conference room with the member administrator by using one or more commands; and
commencing communication in the conference room by the member administrator so that the selected certain other members and member administrator are conference participants using one or more commands.

5. The method of claim 4, wherein the step of creating includes the member administrator selecting a first set secondary function (Room Commence), which is among other first set secondary functions (Room Adjourn, Room Transcribe).

6. The method of claim 5, wherein the first set secondary function (Room Commence) creates and commences communication in the conference room.

7. The method of claim 6, wherein another of the first set secondary functions (Room Adjourn) closes the conference room and ends all communication.

8. The method of claim 7, wherein another of the first set secondary functions (Room Transcribe) allows the member administrator to have the conference communication transcribed.

9. The method of claim 4, wherein the step of connecting allows the member administrator to use a first set dialing function and first set tertiary functions (Phone, Location, IP Address) to access first set tertiary function first elements public branch exchange (PBX) or voice internet protocol (VoIP) gateway.

10. The method of claim 4, wherein the step of commencing communication consists of the member administrator selecting a first set secondary function (Room Commence) to allow communication between the selected certain other members and member administrator in the conference room.

11. The method of claim 4, wherein the member administrator has a plurality of first set functions (Admin, Mute, Whisper, Dial, Create Table, Create Avatar, Quit) available.

12. The method of claim 3, further comprising the steps of:
connecting to a server by the member to join a conference room using one or more commands;
waiting for a member administrator to select the member and commence communication in the conference room so that the selected member is a conference participant by using one or more commands; and
engaging in conversation in the conference room which is comprised of the selected member and member administrator as conference participants using one or more commands.

13. The method of claim 12, wherein the step of connecting allows the member to use a first set dialing function and first set tertiary functions (Phone, Location, IP Address) to access first set tertiary function first elements public branch exchange (PBX) or voice internet protocol (VoIP) Gateway.

14. The method of claim 12, wherein the step of waiting consists of the member waiting for the member administrator to select the member and a first set secondary function (Room Commence) to allow communication between the selected member and member administrator as conference participants.

15. The method of claim 12, wherein the member and selected member has first set functions (Mute, Whisper, Dial,Create Table, Create Avatar, Quit) available.

16. A system for providing enhanced conferencing control features in an Internet-based conference solution, comprising:
a client network; and
a service provider network, wherein the client network transmits to the service provider network connection information and a function request, further **characterized in that** the service provider network operates on the connection information and function request to perform a specific operation.

17. The system of claim 16, wherein the connection information and function request is transmitted between the client network and the service provider network over a wide area network.

18. The system of claim 17, wherein the wide area network is a public internet.

19. The system of claim 18, wherein the connection information and function request is transmitted over a computer telephone integration (CTI) link and public branch exchange (PBX).

20. The system of claim 19, wherein the connection information and function request is transmitted over at least part of the client provider network on a serial link.

21. The system of claim 20, wherein the connection information and function request is transmitted over at least part of the service provider network on a serial link.

22. A system for providing enhanced conferencing control features in an Internet-based conference solution, comprising:
a client network; and
a service provider network, wherein the client network transmits to the service provider network connection information or a function request, further **characterized in that** the service provider network operates on the connection information or function request to perform a specific operation.

23. The system of claim 22, wherein the connection information and function request is transmitted between the client network and the service provider network over a wide area network.

24. The system of claim 23, wherein the wide area network is a public internet.

25. The system of claim 24, wherein the connection information is transmitted over a network layer and central server.

26. The system of claim 25, wherein the function request is transmitted over a computer telephone integration (CTI) link and voice internet protocol (VoIP) Gateway.

27. The system of claim 26, wherein the connection information and function request is transmitted over at least part of the client provider network on a serial link.

28. The system of claim 27, wherein the connection information and function request is transmitted over at least part of the service provider network on a serial link.
